# DEMANDE DE BREVET EUROPEEN

(11) **EP 1 520 999 A2**
(43) Date de publication de la demande: **06.04.2005**
(21) Numéro de dépôt: 04300643.6
(22) Date de dépôt: 30.09.2004
(51) Int. Cl.: F16B 21/09

(54) **Agencement pour le montage d'un élément d'habillage**

(30) Priorité: 30.09.2003 FR 0311428
(71) Demandeur: Renault s.a.s., 92100 Boulogne Billancourt (FR)
(72) Inventeur: Bettray, Guy, Guyancourt, 78288 (FR)

(57) **Abrégé**

Agencement pour le montage d'un élément d'habillage sur un support comportant un élément de fixation de l'élément d'habillage, qui est reçu dans une lumière d'orientation globalement longitudinale du support à l'intérieur de laquelle il peut occuper une position initiale de mise en place et une position finale de montage, décalée longitudinalement par rapport à la position de mise en place, dans laquelle un moyen de retenue de l'élément d'habillage est reçu dans un orifice du support, caractérisé en ce que l'élément de fixation passe par une position intermédiaire dans laquelle un moyen de blocage coopère avec la lumière pour empêcher le coulissement de l'élément de fixation vers sa position initiale de mise en place.

## Description

L'invention concerne un agencement pour le montage d'un élément d'habillage sur un support comportant un élément de fixation de l'élément d'habillage, qui est reçu dans une lumière d'orientation globalement longitudinale du support à l'intérieur de laquelle il peut occuper une position initiale de mise en place et une position finale de montage, décalée longitudinalement par rapport à la position de mise en place, dans laquelle un moyen de retenue de l'élément d'habillage est reçu dans un orifice du support,

Les éléments d'habillage doivent pouvoir être montés facilement sur un support par un opérateur, dans un temps minimal et sans risque de montage défectueux de l'élément.

On connaît un agencement pour le montage, de type à baïonnette, d'une baguette de porte sur un panneau de carrosserie dans lequel l'opérateur amène un élément de fixation de la baguette en vis-à-vis d'une lumière ménagée dans le panneau de carrosserie, L'opérateur insère l'élément de fixation dans la lumière, selon une direction globalement perpendiculaire au plan du panneau, puis le fait coulisser dans la lumière, selon une direction longitudinale globalement parallèle au plan du panneau, jusqu'à ce qu'un moyen de maintien, porté par la baguette, coopère avec un orifice ménagé dans le panneau de l'élément de fixation, qui comporte une patte coopérant avec le panneau de carrosserie, tient la baguette plaquée contre le panneau de carrosserie.

Cependant, il peut arriver que le moyen de maintien soit mal inséré dans l'orifice et qu'il en ressorte. L'élément de fixation risque alors de coulisser dans la lumière en sens inverse. Par conséquent la baguette, qui n'est plus verrouillée, risque de se détacher du panneau.

Cet incident de montage peut entraîner une grande perte de temps car l'opérateur est obligé de recommencer l'opération de montage de la baguette. Cela peut également entraîner des arrêts de la chaîne de montage qui peuvent être très préjudiciables. La chute de la baguette peut aussi abîmer le panneau de porte.

Enfin, si cet incident de montage n'est pas détecté en usine, la perte de la baguette peut intervenir après la livraison du véhicule.

La demande non publiée n° FR0211633 déposée par le demandeur décrit un agencement du type décrit en préambule dans lequel un moyen de blocage anti-retour est constitué par un pion issu de moulage avec l'élément d'habillage et situé à proximité de l'élément de fixation. Ce pion peut être détaché par une pression de l'opérateur et inséré dans la lumière longitudinale.

Cet agencement permet d'empêcher la chute de la baguette mais présente des inconvénients. Tout d'abord, il est nécessaire de modifier l'outillage de moulage pour intégrer le pion. De plus, la tête du pion est visible à la surface de l'élément d'habillage, ce qui est gênant d'un point de vue esthétique.

Afin de pallier ces inconvénients, l'invention a pour objet un agencement pour le montage d'un élément d'habillage sur un support minimisant les risques de chute de l'élément d'habillage.

L'invention a aussi pour objet un agencement permettant de ne pas utiliser de fixation par vis.

L'invention a également pour objet un agencement permettant de ne pas modifier l'outillage de moulage dans le cas où l'on utilise l'agencement du type cité ci-dessus.

L'invention a aussi pour objet un agencement permettant un montage aisé de l'élément d'habillage.

Enfin l'invention a pour objet un agencement permettant un montage esthétique de l'élément d'habillage.

A cet effet, l'invention propose un agencement pour le montage d'un élément d'habillage sur un support du type cité ci-dessus, caractérisé en ce que l'élément de fixation passe par une position intermédiaire dans laquelle un moyen de blocage coopère avec la lumière pour empêcher le coulissement de l'élément de fixation vers sa position initiale de mise en place.

Selon d'autres caractéristiques de l'invention.
- L'élément de fixation est agencé sur un pontet.
- L'élément de fixation et le pontet sont issus de moulage avec l'élément d'habillage,
- Le moyen de blocage est un doigt porté par un bras supérieur élastique d'une agrafe apte à être insérée préalablement au montage de l'élément d'habillage par coulissement à l'intérieur du pontet jusqu'à ce que le moyen de blocage pénètre automatiquement dans un trou ménagé dans la partie supérieure du pontet et s'étende au travers du trou depuis la face externe de la partie supérieure du pontet.
- Le moyen de maintien comporte un ergot, qui est formé à l'extrémité libre d'une lame élastique s'étendant depuis une face interne de l'élément d'habillage, et qui, lorsqu'il est en regard de l'orifice, y pénètre automatiquement sous l'action de la lame élastique.

D'autres caractéristiques et avantages de l'invention apparaîtront à la lecture de la description d'exemples de réalisation d'un agencement pour le montage d'un élément d'habillage sur un support en référence aux dessins annexés dans lesquels:
- La figure 1 est une vue schématique d'un élément d'habillage comportant une agrafe, préalablement au montage.
- La figure 2 est une vue schématique en perspective d'un détail de l'élément d'habillage de la figure 1.
- La figure 3 est une vue schématique latérale de l'agrafe.
- la figure 4 est une vue schématique de dessus de l'agrafe de la figure 3.
- La figure 5 est une vue schématique d'un agencement pour le montage d'un élément d'habillage selon l'invention qui est illustré en position initiale de mise en place lors du montage,
- La figure 6 est une vue schématique en coupe suivant le plan de coupe VI-VI de la figure 5 de l'agencement selon l'invention.
- La figure 7 est une vue schématique de l'agencement de la figure 5 illustré en position intermédiaire de mise en place lors du montage.
- La figure 8 est une vue de l'agencement de la figure 5 illustré en position finale de mise en place lors du montage.

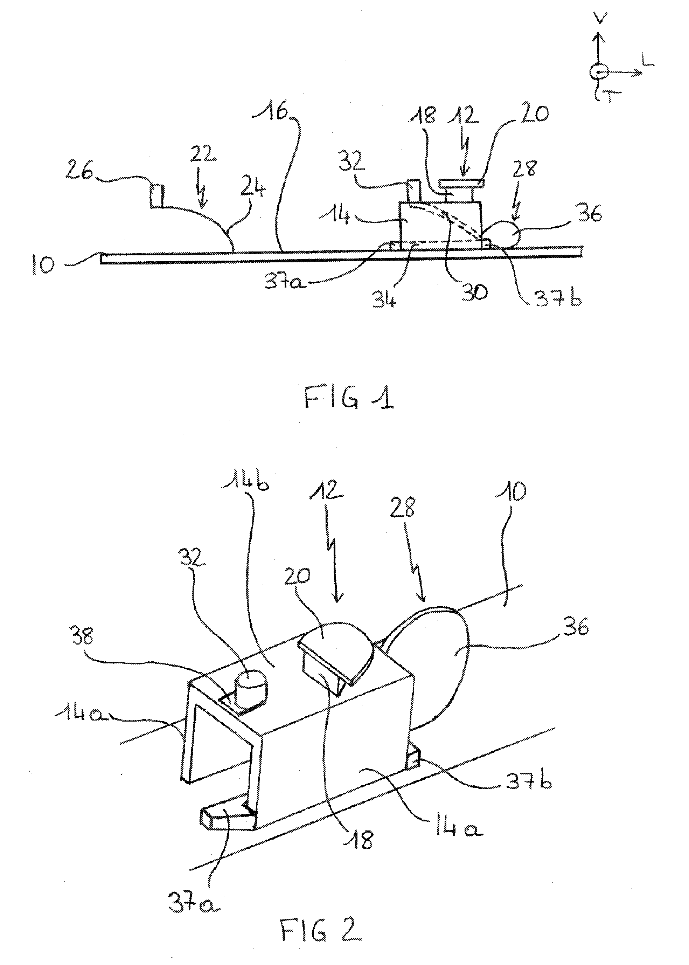

Dans la description qui suit, nous prendrons à titre non limitatif une orientation longitudinale, verticale et transversale indiquée par le trièdre L,V,T de la figure 1.

Tel que représenté aux figures 1 et 2, un élément d'habillage 10, tel qu'une baguette de porte, par exemple, comporte un élément de fixation 12 porté par un pontet 14 agencé sur la face interne 16 de la baguette 10. Le pontet 14 présente deux parois verticales 14a reliées par une paroi horizontale 14b.

Dans l'exemple décrit, l'élément de fixation 12 est un avaloir comportant une base 18 présentant une partie élargie se rétrécissant longitudinalement surmontée d'une surface plane 20 débordant autour de la base 18,

La face interne 16 de la baguette 10 comporte aussi un moyen de maintien 22 composé d'une lame inclinée élastique 24 dont une extrémité libre est munie d'un ergot 26.

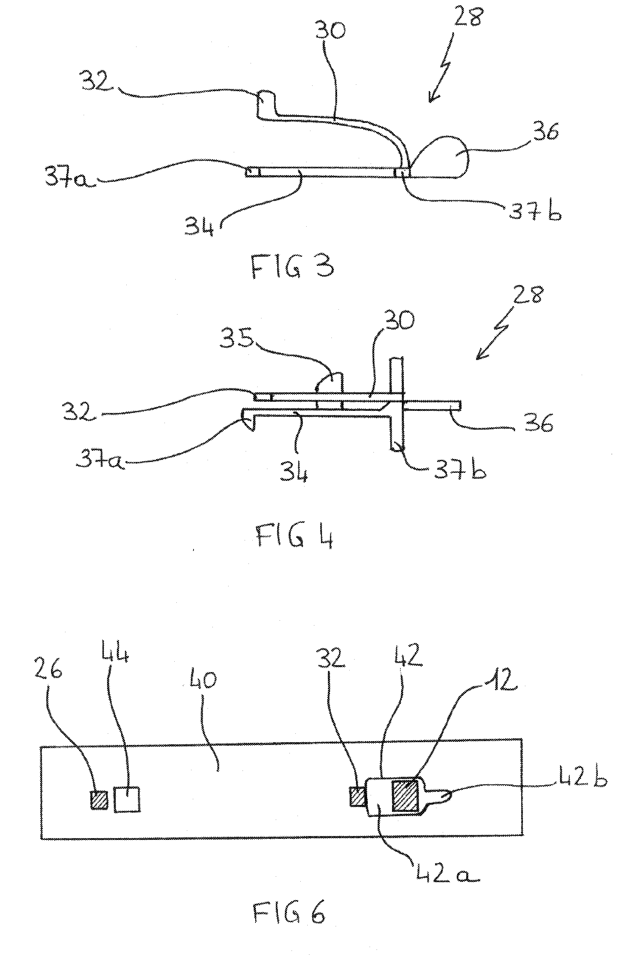

Tel que représenté aux figures 3 et 4, une agrafe 28 est munie d'un bras supérieur élastique 30 dont l'extrémité comporte un doigt 32 et d'un bras inférieur 34 décalé transversalement par rapport au bras supérieur 30.

L'agrafe 28 comporte également un moyen de guidage transversal 35 porté par le bras Meneur 34 et deux butées transversales 37a et 37b. Le moyen de guidage 35 s'étend vers l'intérieur de l'agrafe 28.

La butée 37a est portée par l'extrémité du bras inférieur 34 et s'étend vers l'extérieur de l'agrafe 28. La butée 37b se trouve à la jonction des bras supérieur et inférieur 30 et 34 et s'étend de chaque côté du bras 30.

L'agrafe 28 comporte également une zone de préhension 36 au point de jonction des bras 30 et 34.

Tel que représenté à la figure 2, l'agrafe peut être insérée à l'intérieur du pontet 14,

Ainsi l'opérateur fait coulisser longitudinalement l'agrafe 28 à l'intérieur du pontet 14 en appuyant sur le bras supérieur 30 et en tenant l'agrafe par sa zone de préhension 36. L'agrafe 28 est tout d'abord guidée par le glissement du bras inférieur 34 le long d'une des parois 14a du pontet 14. Ensuite le moyen de guidage 35 permet de recentrer l'agrafe 28 en la guidant le long de la deuxième paroi 14a, de façon que le doigt 32 puisse se trouver en vis-à-vis du trou 38 dans sa position finale.

Le bras supérieur 30 est alors maintenu sous tension par la paroi horizontale 14b du pontet 14 jusqu'à ce que le doigt 32 pénètre automatiquement dans un trou 38 ménagé dans la paroi 14b.

Dans cette position, les butées 37a et 37b coopèrent avec les parois 14a du pontet 14 et bloquent l'agrafe 28 de façon à empêcher son déplacement longitudinal vers l'avant ou vers l'arrière. Le doigt 32 ne risque plus alors de ressortir du trou 38 et l'agrafe 28 reste bien en place.

Tel que représenté à la figure 5, la baguette 10 se trouve en position initiale de mise en place, contre un support 40 tel qu'une tôle, par exemple.

Tel que représenté à la figure 6, une lumière 42, d'orientation globalement longitudinale et en forme de trou de serrure, est ménagée dans le support 40. Elle présente une partie large 42a et une partie étroite 42b. Elle comporte aussi un bord 43 se trouvant à l'opposé de la zone étroite 42b.

En position initiale, la base 18 de l'élément de fixation 12 pénètre dans la zone large 42a de la lumière 42.

La surface de contact du support 40 exerce une pression sur le doigt 32 du bras supérieur 30 de l'agrafe 28 et sur l'ergot 26 du moyen de maintien 22, qui sont alors maintenus sous tension.

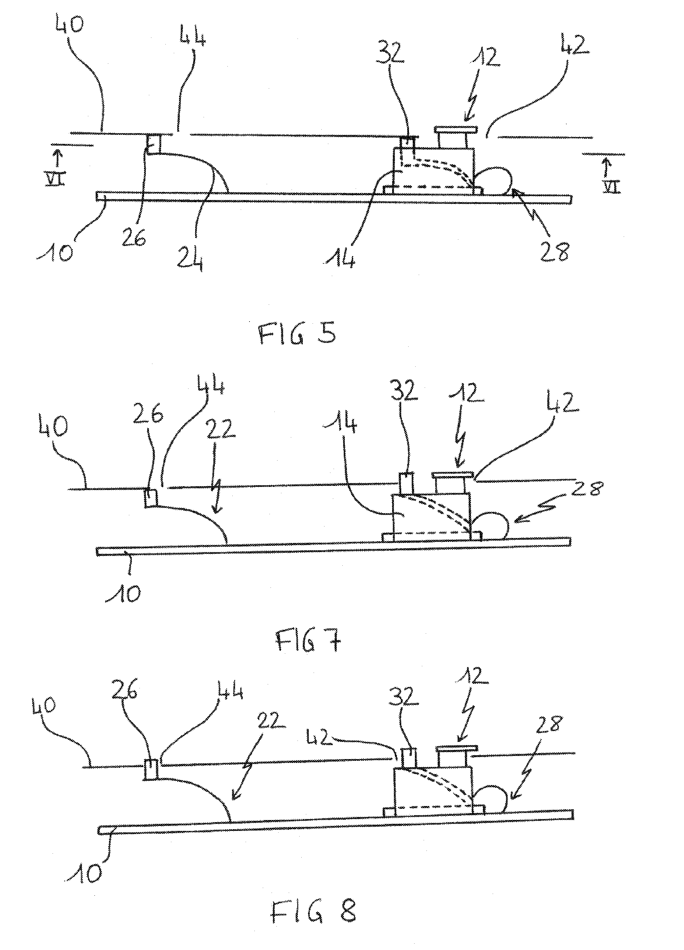

Tel que représenté à la figure 7, la baguette 10 a été déplacée longitudinalement par rapport au support 40 depuis sa position initiale vers une position intermédiaire de mise en place. L'élément de fixation 12 commence à se déplacer à l'intérieur de la lumière 42 de façon que la partie amincie de la base 18 pénètre dans la zone plus étroite 42b de la lumière 42.

Le doigt 32 porté par le bras supérieur 30 de l'agrafe 28 parvient en vis-à-vis de la lumière 42 et y pénètre automatiquement, formant alors un moyen de blocage empêchant le retour de la baguette 10 vers sa position initiale.

Le moyen de maintien 22 se trouve alors encore maintenu sous tension par le support 40.

Tel que représenté à la figure 8, la baguette 10 a poursuivi son déplacement longitudinal pour passer de sa position intermédiaire vers une positon finale de mise en place.

La partie amincie de la base 18, retenue verticalement par la surface plane 20, a complètement pénétré à l'intérieur de la partie plus étroite 42b de la lumière longitudinale, le doigt 32 de blocage coopérant toujours avec la partie large 42a de la lumière 42. Il subsiste entre le moyen de blocage et le bord 43 de la lumière un jeu suffisant pour permettre à la baguette de coulisser encore très légèrement, mais pas assez important pour provoquer la sortie de la partie amincie de la base 18 depuis la zone étroite 42b de la lumière 42 et le détachement de la baguette 10.

L'ergot 26 du moyen de maintien 22 se trouvant en vis-à-vis d'un orifice 44 ménagé dans le support 40, la lame 24 n'est alors plus sous tension et l'ergot 26 pénètre automatiquement à l'intérieur de l'orifice 44.

Pour démonter l'élément d'habillage 10, l'opérateur doit exercer une pression sur l'ergot 26 du moyen de maintien 22 tout en déplaçant légèrement la baguette 10 dans le de façon à dégager l'ergot 26 de l'orifice 44. Ensuite il appuie sur le doigt 36 de l'agrafe 28 tout en déplaçant longitudinalement la baguette de façon à dégager le moyen de fixation 12 de la lumière 42.

Puis, pour retirer l'agrafe 28 du pontet 14, il exerce également une pression sur le doigt 32 tout en tirant sur l'agrafe 28 en la tenant par sa zone de préhension 36.

L'élément d'habillage 10 cependant démontable en cas de besoin (réparation ou remplacement de l'élément d'habillage, démontage simplifié en vue du recyclage du véhicule en fin de vie,...), mais nécessite pour cela l'intervention d'un opérateur.

L'élément d'habillage ne pouvant se détacher de lui-même sans intervention d'un opérateur, l'invention présente ainsi l'avantage de proposer un anti-retour double plus sûr permettant de limiter les risques de mauvais montage et de chute de l'élément d'habillage.

## Revendications

1. Agencement pour le montage d'un élément d'habillage (10) sur un support (40) comportant un élément de fixation (12) de l'élément d'habillage (10), qui est reçu dans une lumière (42) d'orientation globalement longitudinale du support (40) à l'intérieur de laquelle il peut occuper une position initiale de mise en place et une position finale de montage, décalée longitudinalement par rapport à la position de mise en place, dans laquelle un moyen de retenue (22) de l'élément d'habillage (10) est reçu dans un orifice (44) du support (40), **caractérisé en ce que** l'élément de fixation (12) passe par une position intermédiaire dans laquelle un moyen de blocage (32) coopère avec la lumière (42) pour empêcher le coulissement de l'élément de fixation (12) vers sa position initiale de mise en place.

2. Agencement pour le montage d'un élément d'habillage (10) selon la revendication 1, **caractérisé en ce que** l'élément de fixation (12) est agencé sur un pontet (14).

3. Agencement pour le montage d'un élément d'habillage selon la revendication 1 ou 2, **caractérisé en ce que** l'élément de fixation (12) et le pontet (14) sont issus de moulage avec l'élément d'habillage (10),

4. Agencement pour le montage d'un élément d'habillage (10) selon la revendication 2, **caractérisé en ce que** le moyen de blocage (32) est un doigt porté par un bras supérieur élastique (30) d'une agrafe (28) apte à être insérée, préalablement au montage de l'élément d'habillage (10), par coulissement à l'intérieur du pontet (14) jusqu'à ce que le moyen de blocage (32) pénètre automatiquement dans un trou (38) ménagé dans la partie supérieure (14b) du pontet (14) et s'étende au travers du trou (38) depuis la face externe de la partie supérieure (14b) du pontet (14).

5. Agencement pour le montage d'un élément d'habillage (10) selon l'une quelconque des revendications précédentes, **caractérisé en ce que** le moyen de maintien (22) comporte un ergot (26), qui est formé à l'extrémité libre d'une lame élastique (24) s'étendant depuis une face interne (16) de l'élément d'habillage (10), et qui, lorsqu'il est en regard de l'orifice (44), y pénètre automatiquement sous l'action de la lame élastique (24).
